# EUROPEAN PATENT SPECIFICATION

(11) **EP 4 617 446 B1**
(45) Date of publication and mention of the grant of the patent: **02.12.2026**
(21) Application number: 24382280.6
(22) Date of filing: 15.03.2024
(51) Int. Cl.: E04D 11/00, A01G 9/033

(54) **MODULAR VEGETATION COVER SYSTEM WITH DEW HARVESTING**
MODULARES VEGETATIONSABDECKUNGSSYSTEM MIT TAUGEWINNUNG
SYSTÈME MODULAIRE DE COUVERTURE DE VÉGÉTATION AVEC RÉCOLTE DE ROSÉE

(43) Date of publication of application: 17.09.2025
(73) Proprietor: SingularGreen S.L., 03010 Alicante (ES)
(72) Inventor: Serramia Ruiz, Jordi, Alicante (ES)
(74) Representative: Ballester Cañizares, Rosalia

(56) References cited:
- CN-A- 103 362 251
- DE-A1- 19 820 254
- US-A1- 2010 095 586
- US-A1- 2022 167 564

## Description

The present invention relates to a modular green roof system that optimises the collection and autonomous storage of dew water for the efficient and sustainable irrigation of plants. The technical field of the invention falls within the field of gardening systems, atmospheric water collection, sustainable cultivation and architecture, specifically in the development of green roof systems for buildings.

### State of the art

The present invention addresses a critical problem in the field of sustainable architecture and urban landscaping. This problem essentially consists of the need for efficient and sustainable irrigation systems for green roofs. In the current context, where extensive urbanisation and climate change impose significant challenges for water management and environmental sustainability, green roofs emerge as a promising solution. These systems not only improve urban aesthetics, but also contribute to reducing the *heat island* effect, improves air quality and urban biodiversity.

Therefore, green roofs with efficient maintenance in terms of irrigation are necessary.

The proposed innovation focuses on the efficient capture of atmospheric dew as a strategy to offer a sustainable and autonomous solution for the irrigation of green roofs. Documents US4146372A, US4342569A and US4345917A describe systems for capturing and storing atmospheric water for later use as drinking water or for irrigation. However, the present invention proposes to capture dew, but unlike these patents, storage is not carried out in a tank or container for later use, the captured dew is stored in the absorbent layer of each module, which is the subject matter of the present invention, with the objective that this water be directly available for use by the roots of the plants.

Document NL2036081A describes the management of roof rainwater collection, an aspect that differs from the main focus of the proposed invention. Document NL2036081A describes the efficient capture and management of rainwater for use, while the present invention is designed for the capture of dew, a more common water resource in arid climates or dry seasons. Secondarily, the proposed invention can also accumulate rainwater in its absorbent layer, but its main objective is to optimise dew collection to offer a sustainable and efficient solution for irrigating green roofs in adverse weather conditions.

Documents CN116575538A and USD835953S, among others, describe green roof systems with reservoirs for water storage. The operation of these systems depends on the storage of water from precipitation or irrigation. However, the present invention separates the maintenance of plants from dependence on rain or irrigation, with dew collection being the main source of water, which is also a much more regular source than rain in dry climates.

Document US7870691B2 focuses on modular green roof systems that also seek to reduce evaporation by reducing the contact surface of the growing substrate with the air. Unlike this patent, the proposed invention reduces evapotranspiration through a perforated waterproof sheet integrated into the module itself and not with additional elements that are placed on the substrate.

Document US2022167564A1 describes a vegetative roofing system designed for sloped roofs, integrating drainage, soil, and vegetation support into shingles. However, unlike the proposed invention, this system does not focus on the collection and storage of dew water as a primary irrigation source, relying instead on conventional drainage and soil moisture retention.

Similarly, Document DE19820254A1 (D2) discloses a green roof system with water management features, including layers for water retention and drainage. Unlike this system, the present invention does not use external storage tanks or pipe-based irrigation but rather captures and retains dew water passively within an intermediate absorbent layer inside each module, ensuring continuous irrigation without external infrastructure.

Document CN103362251A (D3) describes a green roof system with integrated drip irrigation channels for water distribution. The present invention differs in that it does not rely on an active irrigation system with external water input but rather captures and retains dew water passively within an absorbent layer inside each module, ensuring water availability for plant growth without the need for additional piping.

Finally, Document US2010095586A1 (D4) presents a modular plant propagation and display panel with a structured substrate for plant growth. However, this system does not contemplate the collection and use of dew water as the main irrigation mechanism, instead relying on irrigation through controlled water supply systems.

Document IT202100000005A1 describes a green roof system that captures water from dew and fog. Dew collection is carried out with inclined plates (solar panels) and fog collection is carried out through networks of elements differentiated from the plant support modules, the collected water being conveyed through pipes for storage in tanks. Similarly, document WO2017187420A1 focuses on an intelligent irrigation system based on photovoltaic panels integrated with living roofs, also seeking to irrigate the green roof with dew water obtained from the modules and maximise the energy efficiency of the latter. It combines living roof irrigation with solar panels, using sensors and a controller to optimise water use and generated energy. The innovation of the patent WO2017187420A1 lies in how it manages the temperature of the panels to increase their efficiency, while promoting the efficient use of water, differentiating itself from previous technologies due to its focus on a positive net energy balance and its integration with living roofs.

The article Pirouz *et al. [*Behrouz Pirouz 1, Stefania Anna Palermo and Michele Turco (2021) "Improving the Efficiency of Green Roofs Using Atmospheric Water Harvesting Systems (An Innovative Design)" https: //www.mdpi.com/2073-4441/13/4/546/pdf*]* refers to the introduction of fog collection meshes and solar panels to capture dew and supply water to green roofs.

Unlike the previous documents, in the proposed system it is the plant growing module itself that captures dew for storage in the intermediate layer of the module itself (it is not necessary to use additional plates, solar panels or metal or plastic meshes for water collection). Furthermore, in the proposed system the plant obtains water directly from the intermediate absorbent layer of the module through its roots, avoiding the need for pipes and storage tanks as in the aforementioned two patents and the article.

In summary, despite the cited documents, existing green roof systems are often not efficient in maintaining plants without additional water input when climatic conditions are adverse, especially in arid climates or during dry summer periods in humid climates; depending on irrigation systems with external water supply or recirculation of accumulated rainwater, dew or fog.

Reliance on natural precipitation imposes significant limitations on the regularity and reliability of water supply, leading to the need for the installation of a piped irrigation system and increased consumption of water from external sources or from stored water, which compromises the environmental benefits of green roofs due to excessive water consumption, increasing the difficulty of installation and maintenance costs.

To reduce dependence on the regularity of precipitation, rainwater storage is implemented in many existing green roof systems. This accumulation of water implies an increase in weight in the system that can make the installation of the roof unfeasible due to excess weight. Furthermore, even with this rainwater accumulation capacity, existing green roof systems are not viable in arid climates without external water supply through irrigation systems.

### Description of the invention

The proposed innovation presents a comprehensive solution to this challenge. By efficiently capturing atmospheric dew, which is a more regular source of water than precipitation, the proposed system offers an alternative for providing water to green roofs, in a sustainable and maintenance-free manner.

The subject matter of the invention is achieved with the system of claim 1 that accompanies the present specification. The dependent claims describe particular embodiments of the invention.

The system is made up of separate modules, each comprising three layers: an upper waterproof layer, a lower waterproof layer and an intermediate storage and growing substrate layer. Each module has a shape comprising valleys and hips to evacuate excess water by inclination along the valleys. The inclined upper waterproof surface guides the collected dew water towards perforations where it is filtered towards and stored in the intermediate layer during use, thus providing a continuous and autonomous water supply for the irrigation of plants, without the need for solar panels, irrigation systems or other external power sources.

The system avoids the storage of water in receptacles, nodules and/or panels in the roof itself, thereby reducing the weight compared to the rest of the existing green roof systems. The weight of the system including planting and dew water storage in the intermediate layer is less than 50 kg/m².

The proposed system avoids complex water storage and reuse systems through tanks and pipes.

A notable advantage of the proposed invention is its optional capacity for nestable storage of modules, which facilitates their transportation and storage. There are patents such as US20120227319A1 with green roof trays with a design that allows nestable storage, in these patents the growing substrate is subsequently added on the trays, in the present invention there is already growing substrate (intermediate layer) that is already included in the system. This feature not only optimises space, but also reduces the logistical costs associated with the implementation of green roof systems as it is not necessary to transport large quantities of growing substrate and increases the speed of installation by not requiring the step of placing the cultivation substrate.

In summary, this innovation improves the efficiency and sustainability of water supply in green roofs, increasing the viability of these systems in a wide range of climatic environments. Weight is reduced by reducing the amount of growing substrate and water storage volume, and facilitates installation by providing an integrated solution with separate modules. It is thereby expected to facilitate greater adoption of green roofs in urban architecture, contributing significantly to the sustainability and resilience of modern cities.

Lastly, the present invention contributes to the improvement of the urban microclimate, biodiversity, and the aesthetics of buildings, reducing the heat island effect and promoting environmental sustainability. The invention stands out for its ease of installation, reduced maintenance, and its significant contribution to sustainable architecture and urban landscaping.

Throughout the description and the claims, the word "comprise" and its variants are not intended to exclude other technical features, additions, components or steps. For those skilled in the art, other objects, advantages and features of the invention will be deduced from both the description and the practical use of the invention. The following examples and drawings are provided by way of illustration, and are not intended to limit the present invention. Furthermore, the present invention covers all possible combinations of particular and preferred embodiments indicated herein.

### Brief description of the figures

What follows is a very brief description of a series of drawings that aid in better understanding the invention and which are expressly related to an embodiment of said invention that is presented by way of a non-limiting example of the same.
Figure 1 shows a first practical embodiment of the system of the invention.
Figure 2 shows a second practical embodiment of the system of the invention.
Figure 3 shows a third practical embodiment of the system of the invention.
Figure 4 shows a way of transporting the modules of the system of the invention.
Figure 5 shows an alternative way of transporting the modules of the system.

### Description of a detailed embodiment of the invention

The proposed system represents an innovative solution for the irrigation of green roofs, optimising the capture and storage in an autonomous and efficient manner. This system is based on a multi-layer design that includes a waterproof upper layer, an intermediate, water absorption and growing substrate layer, and a waterproof lower layer.

The present invention comprises a waterproof upper layer (1) that captures dew and conducts water towards the absorbent intermediate layer (2). The inclination of this waterproof upper layer (1) and the perforations (8) thereof allow the captured water to be filtered towards the intermediate layer (2) during use. The perforations (8) will be those necessary to maximise collection and minimise evaporation during periods without collection. The material that makes up this layer must be resistant to adverse weather conditions and be efficient in collecting dew. It could be composed of materials such as metal sheet, lacquered metal sheet, asphalt sheet, plastic sheet, sheet made of rubber, ceramic, stoneware, waterproof insulation, glass, waterproof textile or a combination thereof.

The intermediate absorbent layer (2) is a water reservoir through capillary absorption and a substrate for plants (4). It is composed of materials such as a sheet of bentonite, soil, perlite, vermiculite, charcoal, volcanic gravel, pozzolana, coconut fibre, cellulose fibre, cork, sponge, growing paper, growing foam, growing substrate, absorbent textiles, rock wool, ceramic, clay, phosphate mortar, or a combination thereof, any of these offering adequate water retention capacity and physical and chemical properties to support plant growth.

The waterproof lower layer (3) retains moisture in the intermediate layer (2), preventing unnecessary water loss. In a particular non-limiting embodiment, it could be composed of materials similar to those of the upper layer, ensuring waterproofing and durability, but the same weather resistance is not necessary as it is protected at the bottom of the module.

The system of the invention incorporates different drainage systems.

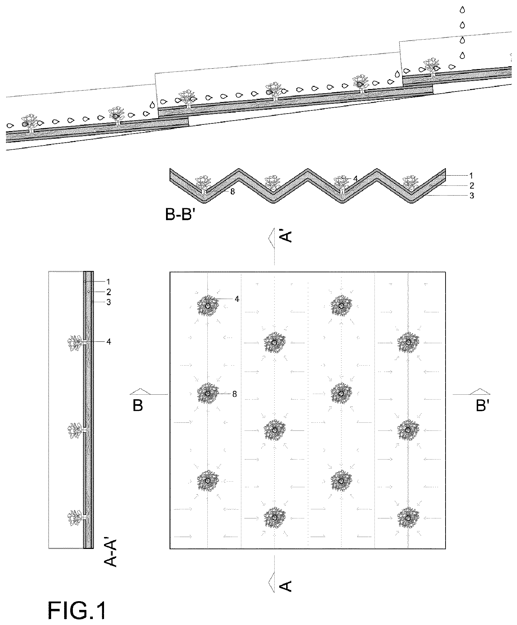

For example, Figure 1 shows an inclined drainage geometry, where an inclined design is used along the roof, facilitating uniform drainage. This option could be more useful on inclined roofs and allows the roof to be waterproofed like a tile.

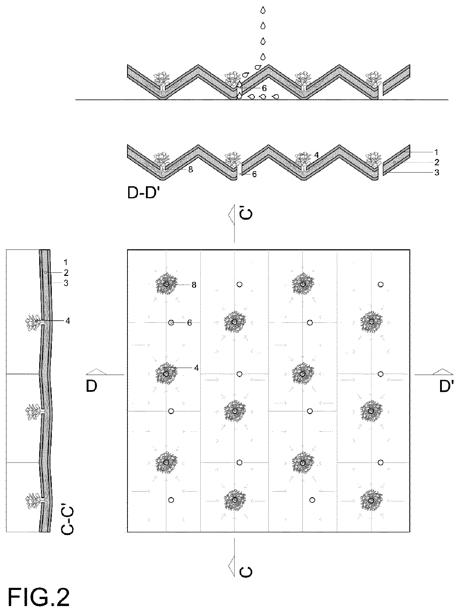

Figure 2 shows a second embodiment of the drainage, with intermittent perforations (6) that pass through the three layers (upper, intermediate, lower) at specific points to evacuate the water. This option may be more useful on flat roofs with existing waterproofing.

The present invention also proposes different variations in planting.

Figure 1 or Figure 2 show planting directly in the absorbent intermediate layer (2) that allows sowing directly in said intermediate layer. Perforations are made in the upper layer (8) to facilitate direct access to the intermediate layer (2), where seeds or cuttings can be introduced, allowing the plants (4) to grow directly from the growing substrate in the intermediate layer (2). These perforations (8) may or may not coincide with those for collecting water.

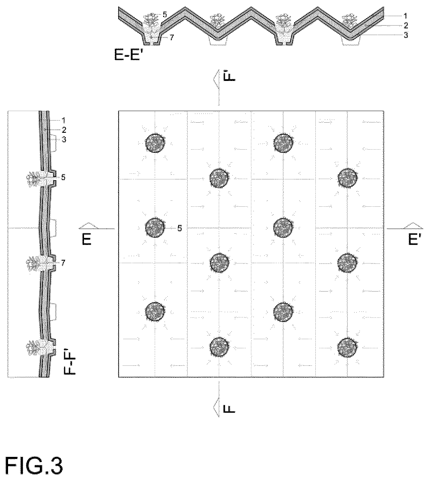

Figure 3 shows a particular embodiment with receptacles for pre-grown species (5), wherein the three layers of the system are configured to form receptacles or containers, suitable for housing plant species previously grown in another container, pot or growing tray.

The invention operates as follows:
The dew water is captured by the waterproof upper layer (1), the capture being optimal if this layer is composed of materials with high infrared emissivity; however, it allows the use of other non-optimal materials to adapt the solution to aesthetic or architectural requirements. The water captured along the surface (1) and conducted by gravity through inclination to the perforations (8) made in this waterproof upper layer (1). It is through these perforations (8) that the water is filtered towards the intermediate absorption layer (2) during use, where it is distributed by capillarity along the surface of this intermediate layer and stored.

Dew collection is optimised with an inclination of the upper layer that is around 30%, although the system can be adapted to different degrees of inclination.

The configuration of the modules can have both angled and undulating designs in their valleys and hips. The illustrations in this document have been drawn with an angled shape to facilitate understanding. However, it is possible to adopt various shapes that meet the planting, layering, tilting and perforation requirements described herein, provided that all configurations maintain a shape comprising valleys and hips to evacuate excess water by inclination along the valleys. This approach allows the creation of aesthetically more organic, undulating and varied designs, adapting to different preferences and architectural contexts.

The low percentage of perforated surface (less than 25%) of the waterproof upper (1) and lower (3) layers prevents the water stored in the intermediate layer (2) from evaporating during the time when there is no water collection.

The roots of the plants (4) grow in the intermediate layer (2) of the module, absorbing the water necessary for their growth.

The present invention allows the efficient management of excess water, both rainwater in the case of precipitation and dew water. The two options for the geometry of the module allow the excess water captured and not stored to be evacuated, with the aim that the intermediate layer (2) where the plant develops does not become waterlogged, that is, there is no complete water saturation that causes root rot or the appearance of pathologies derived from excess water.

There are two variations for drainage in the present invention:
The evacuation of water by inclination, as shown in Figure 1, is produced with a module design with valleys and hips, evacuating excess water along the valleys along the assemblies of roof modules to the end of the same or to the drain. In this option, the perforations (8) that allow water infiltration into the intermediate layer only pass through the upper waterproof sheet (1), leaving the lower waterproof sheet (3) without perforations. This drainage variation 1 is especially useful for installing sloped roofs where the module itself is also the waterproofing of the roof like a tile.

In the drainage of Figure 2, the evacuation of water occurs below the module that acts as a drainage sheet. The excess water is evacuated through perforations (6) that pass through the three layers (1,2,3). In this option there are two types of perforations: those that only pass through the upper sheet (8) and that store water in the intermediate sheet (2) and/or allow planting; and those that pass through the three layers (6) and evacuate the excess water that then runs under the modules along the base surface where they have been installed. The module also maintains a shape comprising valleys and hips to evacuate excess water by inclination along the valleys. This option is especially useful on flat roofs where waterproofing is already installed under the module.

The plant species that grow in the module extend their roots through the intermediate layer (2), this being the main culture medium and the source of water necessary for the growth of the plants. The perforations made in the upper sheet (1) allow plant species to be planted using seeds or cuttings (4), this allows the modules to be pre-grown in the nursery before placing them on site. In this case, only the growing substrate of the intermediate layer (2) exists.

In Figure 3, the module forms receptacles where plants grown in another format (5) can be planted, in this case there would be two growing substrates: the substrate of the intermediate layer (2) and that of the container in which the substrate container (7) is supplied, which would be placed in these receptacles provided in the module for placement.

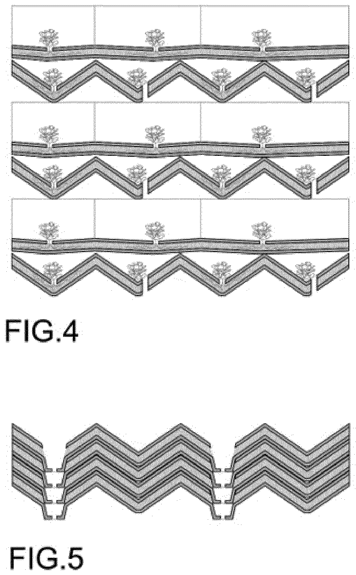

A notable advantage of the proposed innovation is its optional capacity for nestable storage of modules, as seen in Figure 5. This design facilitates efficient transportation and storage, distinguishing itself from other green roof systems because they require the subsequent addition of the growing substrate. Integrating the growing substrate directly into the module not only optimises space and reduces logistics costs, but also speeds up installation, removing the need to transport and place additional growing substrate.

Another feature of the innovation is the possibility that, during transport, by moving or rotating the module with respect to the one immediately below it, there is a space between each module that allows transport with the live plant to its destination, as shown in Figure 4.

This innovation offers an efficient and sustainable solution for water management in green roofs, especially useful in climates with water scarcity and/or in seasons with limited precipitation.

The proposed system has several significant advantages and benefits, which contribute to environmental sustainability, efficiency in water use, ease of installation and maintenance, ease in the growing process and transportation.

Efficient use of water: By capturing and storing dew water, the system takes advantage of a natural, renewable water source that would otherwise be lost to evaporation. This not only reduces the need for additional irrigation, but also decreases the demand for drinking water for the maintenance of urban green spaces.

Broadened installation opportunities: Since an external water supply is not required, it is not necessary to prepare any additional plumbing installation to allow the placement of the green roof. Furthermore, the lightness of the system, which is less than 50 kg/m2, allows it to be placed on a wider range of roofs and structures that can support less weight, such as existing buildings where there is no planned overload or roofs of light structures such as those of industrial warehouses.

Reduction of the carbon footprint: By operating without the need for electrical power or pumping systems, the system minimises its carbon footprint. The absence of electrical or mechanical components reduces CO2 emissions associated with energy production and consumption. The green roof system provides insulation and protection to the building that improves its bioclimatic behaviour. The nestable storage option of the module allows for reduced energy consumption during transportation.

Ease of growing and maintenance of the planting: The unnecessary supply of external water and the regular supply of dew water means that the growth of the plant is not excessively rapid, which reduces the frequency of pruning, facilitating the long-term maintenance of the green roof. The fact that the intermediate substrate layer is not exposed to the outside prevents the germination of species not foreseen in the roof that could ruin the ecological, bioclimatic and aesthetic performance thereof.

Ease of installation: The lightness and ease of transport of the system, as well as the fact that additional substrate does not need to be placed, enables installation performance that is higher than that of other green roof systems. The option for transportation with plants allows these yields to be improved even further as it is not necessary to plant the plant during the installation process of the green roof.

Improvement in air quality and microclimate: green roofs, supported by this system, contribute to the purification of the air and the moderation of the urban microclimate. Plants capture CO2, release oxygen and help lower temperatures in densely populated urban areas.

Promotion of biodiversity: by consistently and sustainably providing growing substrate and water, the system encourages the growth of a variety of plant species. This contributes to urban biodiversity, offering habitats for insects and birds.

Drought resistance and climatic adaptability: the ability to store dew water during collection periods facilitates the resistance of the green roof in drought conditions or in climates with little precipitation, ensuring its viability in a wide range of environments.

In summary, this dew water collection and storage system for green roofs not only represents a practical and efficient solution for the irrigation of urban green spaces, but also significantly contributes to expanding the range of situations where a green roof is viable, improving environmental sustainability and quality of life in cities.

The modular green roof system with dew water capturing has a wide range of potential applications and variations that make it adaptable to different contexts and needs. This system can be implemented in various structures and environments, providing sustainable and efficient plant coverage solutions for buildings. Some of these applications are described below:
Urban Buildings: in cities with little space available for green areas, this system can be used on the roofs of residential, commercial and institutional buildings to create elevated gardens that contribute to reducing the heat island effect, improving air quality, and offering a green space for the well-being of residents. Improvement of the thermal behaviour of buildings: the green surface created improves the bioclimatic behaviour of the building by providing cooling in summer and thermal protection in winter.
Industrial Facilities with light roofs: in industrial warehouses and storage facilities, where other green roof systems are too heavy, the implementation of green roofs helps to improve thermal insulation, reducing energy costs and the environmental impact of these operations.
Buildings in facilities in areas with low precipitation or periods without rain: in regions with water scarcity, the system can be a vital solution to maintain green areas without requiring water for irrigation, efficiently taking advantage of dew as a water resource.
Inclined roofs: the encapsulation of the intermediate substrate layer between the other layers allows the creation of green roofs with any inclination without the problem of substrate slippage that other green roof systems must solve.
Urban Agriculture: the modularity and water collection capacity of the system allow its use in urban agriculture projects, facilitating the cultivation of food on terraces and rooftops without the need for irrigation.
Integration with Renewable Energies: in addition to its primary function, the system can be designed to integrate with renewable energy solutions, such as solar panels, where the presence of plants can help reduce the temperature of the panels, increasing their efficiency.
Biodiversity Solutions: by carefully selecting plant species for the green roof, the system can be designed to encourage local biodiversity, providing habitats for pollinators and other urban species, contributing to the creation of ecological corridors in urban areas.
Implementation in Public Infrastructure: bus stops, park benches, and other public structures can benefit from the implementation of this modular system, providing not only shade and cooling but also aesthetically enhancing the public space.
Education and Environmental Awareness: the implementation of this system in schools and community centres can serve as an educational tool to teach about sustainability, water management and urban agriculture, promoting greater environmental awareness in the community.

These applications demonstrate the versatility and potential of the modular green roof system with dew water collection to significantly contribute to sustainability and improving the quality of life in urban and rural environments.

The described invention represents a significant advance in the design and implementation of green roof systems, by introducing an innovative and sustainable method for the collection and management of dew water. This modular system not only addresses critical environmental challenges associated with urbanisation and climate change, but also offers a practical and effective solution to improve the sustainability of urban spaces.

The ability of this system to efficiently capture, store and use dew water directly for irrigation of vegetation establishes a new paradigm in the field of sustainable architecture and urban landscaping. By reducing dependence on external water sources and optimising the use of available natural resources, the invention proposes an effective strategy for maintaining green roofs in a wide variety of climatic environments, especially those where water is a limited resource.

Furthermore, the implementation of this modular system significantly contributes to the reduction of the heat island effect in cities, improvement of air quality, promotion of biodiversity and improvement of the well-being of urban residents. The flexibility in design and ease of installation make this solution adaptable to different types of buildings and structures, facilitating its adoption in new construction projects and in the rehabilitation of existing buildings.

The scope of the invention transcends simple technical application to become a valuable tool in promoting greener and more sustainable construction practices. By providing an efficient method for water management in green roofs, this system has the potential to inspire new developments in green infrastructure design, thereby driving innovation in sustainable architecture and urban development.

In conclusion, this invention not only presents an advanced technical solution for specific challenges in green roof management, but also highlights the commitment to environmental sustainability, adaptability and innovation in urban design. With its implementation, the facilitation of greater adoption of green roofs in cities is expected, contributing to the construction of more sustainable, resilient and habitable urban environments for future generations.

## Claims

1. A modular green roof system with dew water collection, said roof system comprising separate modules, wherein each module comprises:
a waterproof upper layer (1) comprising a plurality of through holes (8), an intermediate absorption layer (2) located at the bottom of the waterproof upper layer (1); and a lower waterproof layer (3) located at the bottom of the intermediate absorption layer (2),
**characterised in that**
each module has a shape comprising valleys and hips to evacuate excess water by inclination along the valleys, and **in that** the dew water deposited on the waterproof upper layer (1) during use is filtered towards the intermediate absorption layer (2) through the holes (8) of the upper layer (1), the water being retained in said second absorption layer (2), between the waterproof upper layer (1) and the waterproof lower layer (3); and wherein the intermediate absorption layer (2) is configured as a growing substrate for the green.

2. The system according to claim 1 wherein the waterproof upper layer (1) is inclined with respect to the horizontal plane.

3. The system according to any one of the preceding claims wherein the intermediate absorption layer (2) is essentially formed by a sheet of bentonite, soil, perlite, vermiculite, charcoal, volcanic gravel, pozzolana, coconut fibre, cellulose fibre, cork, sponge, growing paper, growing foam, growing substrate, absorbent textiles, rock wool, ceramic, clay, phosphate mortar, or a combination thereof.

4. The system according to any one of the preceding claims comprising a through hole (6) that passes through the upper, intermediate and lower layers, wherein said perforation (6) is configured as a drainage element.

5. The system according to any one of the preceding claims comprising a substrate container (7) that includes an additional substrate with a crop (5).

6. The system according to any one of the preceding claims wherein the waterproof upper layer (1) is composed of a material optimised for dew collection, selected from the group consisting of metal sheet, lacquered metal sheet, asphalt sheet, plastic sheet, sheet made of rubber, ceramic, stoneware, waterproof insulation, glass, waterproof textile or a combination thereof.

7. The system according to any one of the preceding claims wherein the waterproof lower layer (3) is composed of a material selected from the group consisting of metal sheet, lacquered metal sheet, asphalt sheet, plastic sheet, sheet made of rubber, ceramic, stoneware, waterproof insulation, glass, waterproof textile or a combination thereof.

## Patentansprüche

1. Modulares Gründachsystem mit Tauwassersammlung, wobei das Dachsystem separate Module umfasst, wobei jedes Modul Folgendes umfasst:
eine wasserdichte obere Schicht (1) umfassend eine Vielzahl von Durchgangslöchern (8), eine Zwischenabsorptionsschicht (2), die sich an der Unterseite der wasserdichten oberen Schicht (1) befindet; und eine untere wasserdichte Schicht (3), die sich an der Unterseite der Zwischenabsorptionsschicht (2) befindet,
**dadurch gekennzeichnet, dass**
jedes Modul eine Form aufweist, die Täler und Kämme umfasst, um überschüssiges Wasser durch die Neigung entlang der Täler abzuleiten, und dass das während der Verwendung auf der wasserdichten oberen Schicht (1) abgeschiedene Tauwasser durch die Löcher (8) der oberen Schicht (1) zur Zwischenabsorptionsschicht (2) hin gefiltert wird, wobei das Wasser in der zweiten Absorptionsschicht (2) zwischen der wasserdichten oberen Schicht (1) und der wasserdichten unteren Schicht (3) zurückgehalten wird; und wobei die Zwischenabsorptionsschicht (2) dazu konfiguriert ist, als Anzuchtsubstrat für die Begrünung zu dienen.

2. System nach Anspruch 1, wobei die wasserdichte obere Schicht (1) gegenüber der horizontalen Ebene geneigt ist.

3. System nach einem der vorhergehenden Ansprüche, wobei die Zwischenabsorptionsschicht (2) im Wesentlichen aus einer Lage aus Bentonit, Erde, Perlit, Vermiculit, Holzkohle, Vulkankies, Puzzolan, Kokosfasern, Cellulosefasern, Kork, Schwamm, Anzuchtpapier, Anzuchtschaum, Anzuchtsubstrat, saugfähigen Textilien, Steinwolle, Keramik, Ton, Phosphatmörtel oder einer Kombination davon gebildet ist.

4. System nach einem der vorhergehenden Ansprüche, umfassend eine Durchgangsbohrung (6), die die obere, zwischenliegende und untere Schicht durchdringt, wobei die Durchgangsbohrung (6) als Drainageelement konfiguriert ist.

5. System nach einem der vorhergehenden Ansprüche, umfassend einen Substratbehälter (7), der ein zusätzliches Substrat mit einer Pflanze (5) enthält.

6. System nach einem der vorhergehenden Ansprüche, wobei die wasserdichte obere Schicht (1) aus einem für das Sammeln von Tau optimierten Material besteht, ausgewählt aus der Gruppe bestehend aus Metallblech, lackiertem Metallblech, Asphaltbahn, Kunststoffbahn, Bahn aus Gummi, Keramik, Steinzeug, wasserdichter Dämmung, Glas, wasserdichtem Textil oder einer Kombination davon.

7. System nach einem der vorhergehenden Ansprüche, wobei die wasserdichte untere Schicht (3) aus einem Material besteht, ausgewählt aus der Gruppe bestehend aus Metallblech, lackiertem Metallblech, Asphaltbahn, Kunststoffbahn, Bahn aus Gummi, Keramik, Steinzeug, wasserdichter Dämmung, Glas, wasserdichtem Textil oder einer Kombination davon.

## Revendications

1. Système modulaire de toiture végétale avec collecte d'eau de rosée, ledit système de toiture comprenant des modules séparés, dans lequel chaque module comprend :
une couche supérieure imperméable (1) comprenant une pluralité de trous traversants (8), une couche d'absorption intermédiaire (2) située au bas de la couche supérieure imperméable (1) ; et une couche inférieure imperméable (3) située au bas de la couche d'absorption intermédiaire (2)
**caractérisé en ce que**
chaque module a une forme comprenant des noues et des arêtes pour évacuer l'eau en excès par inclinaison le long des noues, et **en ce que** l'eau de rosée déposée sur la couche supérieure imperméable (1) lors de l'utilisation est filtrée vers la couche d'absorption intermédiaire (2) à travers les trous (8) de la couche supérieure (1), l'eau étant retenue dans ladite deuxième couche d'absorption (2), entre la couche supérieure imperméable (1) et la couche inférieure imperméable (3) ; et dans lequel la couche d'absorption intermédiaire (2) est conçue comme un substrat de culture pour la végétation.

2. Système selon la revendication 1, dans lequel la couche supérieure imperméable (1) est inclinée par rapport au plan horizontal.

3. Système selon l'une quelconque des revendications précédentes, dans lequel la couche d'absorption intermédiaire (2) est essentiellement formée par une feuille de bentonite, terre, perlite, vermiculite, charbon de bois, gravier volcanique, pouzzolane, fibre de coco, fibre de cellulose, liège, éponge, papier de culture, mousse de culture, substrat de culture, textiles absorbants, laine de roche, céramique, argile, mortier phosphaté, ou d'une combinaison de ceux-ci.

4. Système selon l'une quelconque des revendications précédentes, comprenant un trou traversant (6) qui passe à travers les couches supérieure, intermédiaire et inférieure, dans lequel ladite perforation (6) est conçue comme un élément de drainage.

5. Système selon l'une quelconque des revendications précédentes comprenant un récipient de substrat (7) qui comprend un substrat supplémentaire avec une culture (5).

6. Système selon l'une quelconque des revendications précédentes dans lequel la couche supérieure imperméable (1) se compose d'un matériau optimisé pour la collecte de la rosée, choisi dans le groupe constitué par une tôle métallique, une tôle métallique laquée, une feuille d'asphalte, une feuille de plastique, une feuille en caoutchouc, une céramique, du grès, un isolant imperméable, du verre, un textile imperméable ou une combinaison de ceux-ci.

7. Système selon l'une quelconque des revendications précédentes, dans lequel la couche inférieure imperméable (3) se compose d'un matériau choisi dans le groupe constitué par une feuille métallique, une feuille métallique laquée, une feuille d'asphalte, une feuille de plastique, une feuille en caoutchouc, une céramique, du grès, un isolant imperméable, du verre, un textile imperméable ou une combinaison de ceux-ci.
